# EUROPEAN PATENT APPLICATION

(11) **EP 2 447 827 A2**
(43) Date of publication of application: **02.05.2012**
(21) Application number: 11186255.3
(22) Date of filing: 21.10.2011
(51) Int. Cl.: G06F 3/12

(54) **Converter and image forming apparatus connected thereto**

(30) Priority: 27.10.2010 KR 20100105099
(71) Applicant: SAMSUNG ELECTRONICS CO., LTD., Suwon-si, Gyeonggi-do (KR)
(72) Inventor: One, Jae Yoon, Gyeonggi-do (KR); Lee, Sang Kyu, Seoul (KR); Park, In, Gyeonggi-do (KR)
(74) Representative: Bruce, Alexander Richard Henry

(57) **Abstract**

A converter device supplied with a drive power from an image forming apparatus instead of an external device and an image forming apparatus connected to the converter device. The converter device is provided between the image forming apparatus including a power supply port and a USB port and a host device including a parallel port such that data is transmitted and received between the image forming apparatus and the host device. The converter device is connected to the image forming apparatus through the power supply port and a power cable to be supplied with power. The converter device is operated with the supplied power to convert data output from the USB port into data capable of being input to the parallel port or convert data output from the parallel port into data capable of being input to the USB port.

## Description

The present invention relates to a converter that converts data transmitted between a host device and an image forming apparatus, and more particularly, to a converter and an image forming apparatus connected to the converter.

A conventional computer system includes a computer main body (referred to as a "computer" hereinafter) that handles information and various peripheral devices to process information. Here, the computer is a host device and the peripheral devices may include an image forming apparatus. The image forming apparatus operates in connection with the host device when connected to the host device and may be a printer or a scanner.

The image forming apparatus receives data from the computer and performs an image forming operation. The image forming apparatus and the computer include ports such that they transmit and receive data through the ports. The ports may include a universal serial bus (USB) port or a parallel port.

Here, the image forming apparatus may include a parallel port and the computer may include a USB port. Otherwise, the image forming apparatus may include a USB port and the computer may include a parallel port.

If the port type of the image forming apparatus is different from that of the computer, a format of data transmitted and received between the image forming apparatus and the computer needs to be converted into a data format suitable for the respective ports of the image forming apparatus and the computer. For example, a USB data format is converted into a parallel data format or the parallel data format is converted into the USB data format for data transmission. A configuration to convert a data format is a converter.

The converter performs conversion between data formats respectively corresponding to the ports of the computer and the image forming apparatus. The converter needs power to be driven. If the power used to drive the converter is supplied from an external device instead of the host device or the image forming apparatus, unstable power may be supplied to the converter.

The present general inventive concept provides a converter device supplied with driving power from an image forming apparatus and an image forming apparatus connected to the converter device.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept may be achieved by providing a converter device connected to a universal serial bus (USB) port of an image forming apparatus and a parallel port of a host device includes: a USB port connector connected to the USB port, a parallel port connector connected to the parallel port; a power connector connected to a power supply port of the image forming apparatus to be supplied with power from the image forming apparatus, and a data conversion unit using the supplied power to convert data output from the USB port into data capable of being input to the parallel port or to convert data output from the parallel port into data capable of being input to the USB port.

The data conversion unit may include a microcomputer to perform conversion between data for the parallel port and data for the USB port.

The data conversion unit may include an upper cover and a lower cover press-fitted to each other.

The data conversion unit may further include fixing pins provided to both sides of the combined upper and lower covers and rotated to fix the parallel port connector to the parallel port.

The converter device may further include a connecting cable to connect the USB port connector and the power connector to the data conversion unit.

The converter device may further include a data conversion circuit connector to connect the connecting cable to the data conversion unit, wherein the data conversion unit includes a ground spring connected to a ground pin of the data conversion circuit connector.

The foregoing and/or other aspects and utilities of the present general inventive concept may also be achieved by providing an image forming apparatus connected to a host device including a parallel port through a converter device, the image forming apparatus including a power supply unit to convert commercial power into power at a predetermined level so as to supply the power to the converter device, a power supply port connected to the converter device through a connecting cable so as to supply the power output from the power supply unit to the converter device, and a USB port connected to the converter device such that data is transmitted/received to/from the host device.

The image forming apparatus may further include a control unit to directly output the power output from the power supply unit to the converter device or to convert the power into power at a level required for the converter device to operate and output the converted power.

The image forming apparatus may further include a power supply switch circuit including a switch to transfer the power to the converter device or cut off the power supplied to the converter device.

The power supply switch circuit may include a switch to transfer the power or cut off power supply based on a level of current generated from the power output from the control unit.

The control unit may turn on or off the switch based on an operation mode of the image forming apparatus so as to supply power to the converter device or cut off power supply to the converter device.

The power supply switch circuit may include a switch to transfer the power or cut off power supply based on a current level and a switch to transfer the power or cut off power supply based on an operation mode of the image forming apparatus.

The switch to transfer the power or cut off power supply based on an operation mode of the image forming apparatus may cut off power supply if the operation mode of the image forming apparatus is a mode that does not require the converter device to operate and transfer the power if the operation mode of the image forming apparatus is a mode that requires the converter device to operate.

The image forming apparatus may further include a main body to accommodate the supply unit, the power supply port, the power supply unit, and the main body USB port, and a converter device including a USB port connector connected to the main body USB port, a parallel port connector connected to a parallel port of an external device, a power connector connected to the power supply port of the main body to be supplied with power from the image forming apparatus, and a data conversion unit using the supplied power to convert data output from the USB port into data capable of being input to the parallel port or to convert data output from the parallel port into data capable of being input to the USB port.

The foregoing and/or other aspects and utilities of the present general inventive concept may also be achieved by providing a converter device including a USB port to communicate with an external apparatus to provide input and output of a USB format signal, a parallel port to communicate with an external device to provide input and output of a parallel format signal, a power connector to receive a power from the same external apparatus, and a data conversion unit connected to the power connector, and connected between the USB port and the parallel port to convert the parallel format signal into the USB format signal and the USB format signal into the parallel format signal, according to the received power.

The foregoing and/or other aspects and utilities of the present general inventive concept may also be achieved by providing an image forming apparatus including a main body having a power supply port to output a power to an external device, a main body USB port coupled to the same external device to provide input and output of a USB format signal, according to the output power, and a printing unit to perform a printing unit according to the received USB format signal.

The image forming apparatus may further include a control unit to prevent the output of the power through the power supply port according to a determination of whether the USB format data is necessary to perform a printing operation of the printing unit.

The image forming apparatus may further include a control unit to selectively output the power according to the input and output of the USB format signal.

The foregoing and/or other aspects and utilities of the present general inventive concept may also be achieved by providing an image forming apparatus including a main body having a power supply port to output a power to an external device, a main body USB port coupled to the same external device to provide input and output of a USB format signal, according to the output power, and a printing unit to perform a printing unit according to the received USB format signal, and a converter device which may include a USB port to communicate with the main body USB port to provide input and output of the USB format signal, a parallel port to communicate with an external device to provide input and output of a parallel format signal, a power connector to receive a power from the power supply port of the main body, and a data conversion unit connected to the power connector, and connected between the USB port and the parallel port to convert the parallel format signal into the USB format signal and the USB format signal into the parallel format signals.

The foregoing and/or other aspects and utilities of the present general inventive concept may also be achieved by providing a method of an image forming apparatus, the method including providing a power supply port and a main body USB port on a main body of an image forming apparatus; communicating with the main body USB port for input and output of a USB format signal, communicating with the power supply port for a power, communicating with an external device for input and output of a parallel format signal, converting the parallel format signal into the USB format signal or the USB format signal into the parallel format signals according to the power, and performing a printing operation according to the USB format signal transmitted through the main body USB port

These and/or other aspects of the present general inventive concept will become apparent and more readily appreciated from the following description of the embodiments, taken in conjunction with the accompanying drawings of which:
FIG. 1 is a view illustrating an electronic system having a host device including a parallel port and an image forming apparatus including a USB port connected to the parallel port of the host device through a converter according to an embodiment of the present general inventive concept;
FIG. 2A is a view of the USB port and a power supply port region A of the image forming apparatus of FIG. 1;
FIG. 2B is a view of a parallel port region B of the host device of FIG. 1;
FIG. 3A is a view illustrating the converter of FIG. 1 according to an embodiment of the present general inventive concept;
FIG. 3B is an exploded perspective view illustrating the mechanical configuration of a data conversion unit of the converter according to an embodiment of the present general inventive concept;
FIG. 4 shows a connecting cable of the converter according to an embodiment of the present general inventive concept;
FIG. 5 is a circuit diagram illustrating a data conversion circuit connector of FIG. 4;
FIG. 6 is a view illustrating an operation of a microcomputer of the data conversion circuit of the converter according to an embodiment of the present general inventive concept;
FIG. 7 is a block diagram illustrating the converter and the image forming apparatus connected thereto according to an embodiment of the present general inventive concept;
FIG. 8 is a block diagram illustrating a control unit connected to a power supply unit and a power supply switch circuit of the image forming apparatus according to an embodiment of the present general inventive concept;
FIGS. 9A, 9B and 9C are block diagrams illustrating exemplary circuit configurations of the power supply switch circuit of the image forming apparatus according to embodiments of the present general inventive concept;
FIG. 10 is a block diagram illustrating the converter and the image forming apparatus connected thereto according to an embodiment of the present general inventive concept; and
FIGS. 11A and 11B are flowcharts illustrating methods to be performed in an image forming apparatus according to an embodiment of the present general inventive concept.

Reference will now be made in detail to the embodiments of the present general inventive concept, examples of which are illustrated in the accompanying drawings, wherein like reference numerals refer to like elements throughout.

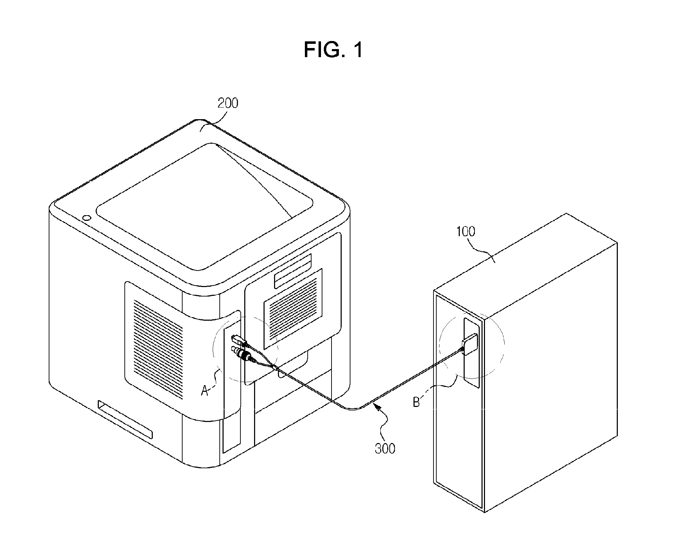

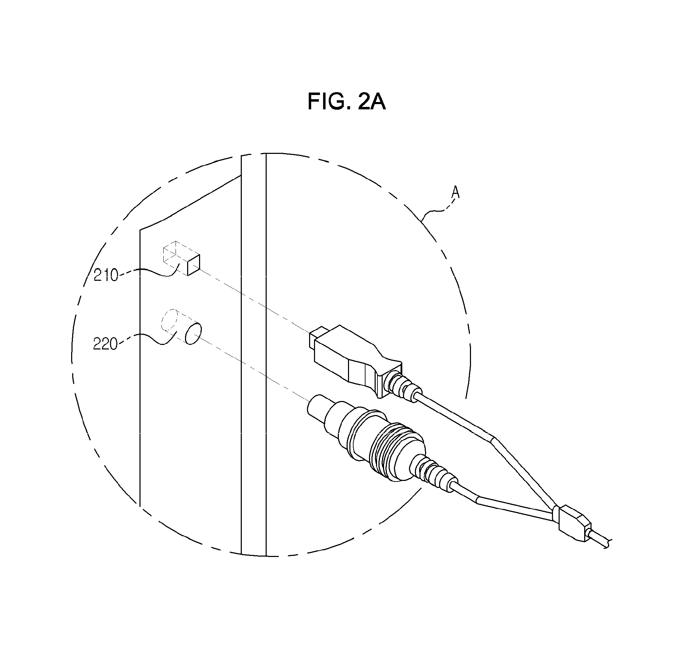

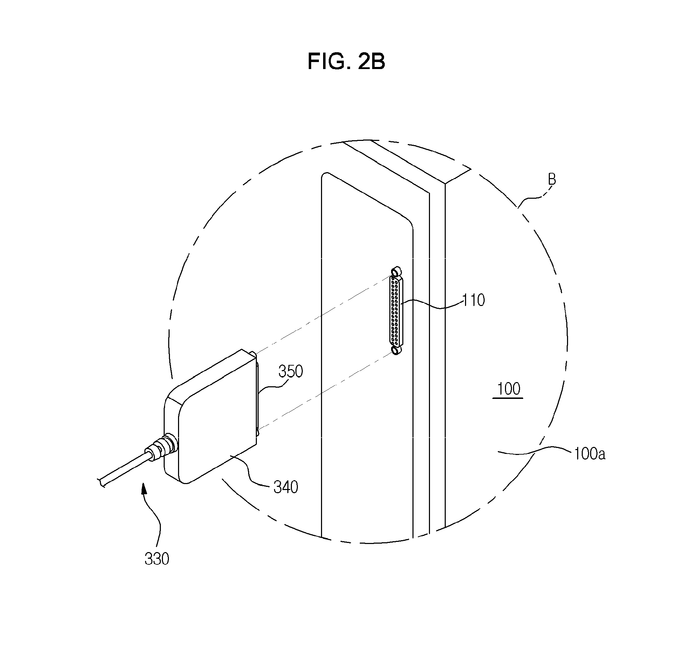

FIG. 1 illustrates an electronic system having a host device 100 including a parallel port and an image forming apparatus 200 including a USB port connected to the parallel port of the host device 100 through a converter device 300 according to an embodiment of the present general inventive concept. FIG. 2A illustrates a USB port 210 and a power supply port and USB port region A of the image forming apparatus 200 of FIG. 1, and FIG. 2B illustrates a parallel port 110 and a parallel port region B of the host device 100 of FIG. 1.

Referring to FIGS. 1, 2A and 2B, the host device 100 includes the parallel port 110.

The parallel port 110 is an interface to connect a peripheral device to the host device 100 and may be defined as a printer port to communicate with the image forming apparatus 200 to perform one of more functions, for example, a print function, of the image forming apparatus 200. The parallel port 110 may have an IEEE 1284 interface structure. The parallel port 110 includes a plurality of status lines through which data is transmitted to or received from an external device, for example, the image forming apparatus 200. The parallel port 110 may be a communication port to transmit/receive only data. The parallel port 110 may not be a power port to supply power to an external device, for example, the converter device 300. It is possible that the parallel port 110 may have a power port line to supply power. In this case, the power port line of the parallel port 110 is connected to an internal power source of the host device 100 to supply power to the external device through the converter device 300. However, the power supplied from the parallel port 110 may not be sufficient for the external device to perform the function thereof. The external device may require a power greater than the power supplied through the parallel port 110. That is, the parallel port 110 may not supply a sufficient amount of power from the host device 100 to the external device to perform a function of the external device.

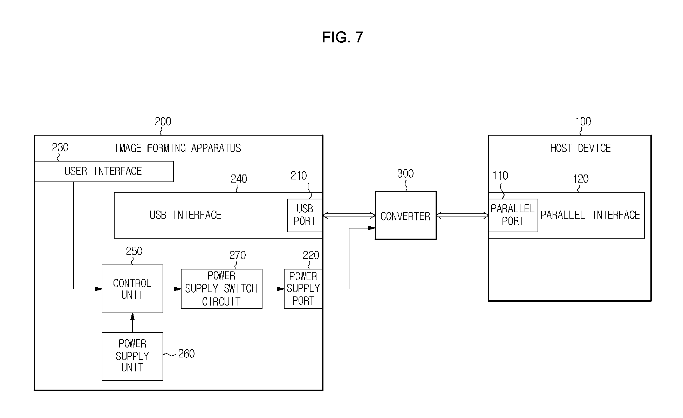

The host device 100 includes a parallel interface (120 of FIG. 7). The parallel interface (120 of FIG. 7) performs data communication with the image forming apparatus 200. The parallel interface (120 FIG. 7) includes the parallel port 110 and is connected to the image forming apparatus 200 through the parallel port 110.

The image forming apparatus 200 performs functions according to a user input and/or communications with the host device 100 when connected to the host device 100.

The image forming apparatus 200 includes the USB port 210 such that the image forming apparatus 200 transmits and receives data through the USB port 210. The image forming apparatus 200 transmits/receives data to/from the host device 100 through the USB port 210. The USB port 210 may be an interface to connect a peripheral device to the image forming apparatus 200. The USB port 210 may replace conventional serial and parallel ports.

The image forming apparatus 200 includes a power supply port 220 through which power is supplied to the converter device 300. The image forming apparatus 200 may continuously supply the power to the converter device 300, or supply the power to the converter device 300 or cut off the power supply to the converter device 300 based on the status of the image forming apparatus 200 when connected to the converter device 300.

The USB port 210 and the power supply port 220 may be formed on a main body (housing) 200a of the image forming apparatus 200.

The converter device 300 is a parallel-to-USB converter. The converter 300 performs conversion between a parallel data format and a USB data format. That is, when data in the parallel format is input to the converter device 300 from the parallel port 110, the converter device 300 converts the data in the parallel format into data in the USB format and outputs the converted data in the USB format to the USB port 210. When data in the USB format is input to the converter device 300 from the USB port 210, the converter device 300 converts the data in the USB format into data in the parallel format and outputs the converted data in the parallel format to the parallel port 110.

The converter device 300 is supplied with driving power to perform the data conversion. Referring to FIGS. 1 and 2A, the converter device 300 may be supplied with power from the image forming apparatus 200.

The converter device 300 may include a USB port connector 310 to be connected to the USB port 210 of the image forming apparatus 200, and a power connector 320 to be connected to the power supply port 220 of the image forming apparatus 200.

The converter device 300 may further include a coupler 315 to couple the USB port connector 310 and the power connector 320 to form a connecting cable 330.

The converter device 300 may further include a data conversion unit 340 connected to the connecting cable 330, and a parallel connector 350 to be connected to the parallel port 110 of the host device 110.

The converter device 300 may not be supplied with power from the host device 100 due to characteristics of the parallel port 110, that is, since the connecting cable 330 of the converter device 300 is connected to the parallel port 110 of the host device 100. In addition, while the converter device 300 is connected to the USB port 210 of the image forming apparatus 200 through the connecting cable 330, the USB port 210 of the image forming apparatus 200 does not supply power to the converter device 300 since it is a device port having no function of supplying power. Accordingly, an additional power supply port is required to supply power to the converter device 300.

The parallel port 110 may be formed on a main body or housing 100a of the host device 100 and may be connected to the converter device 300 to provide input or output of the parallel format signal.

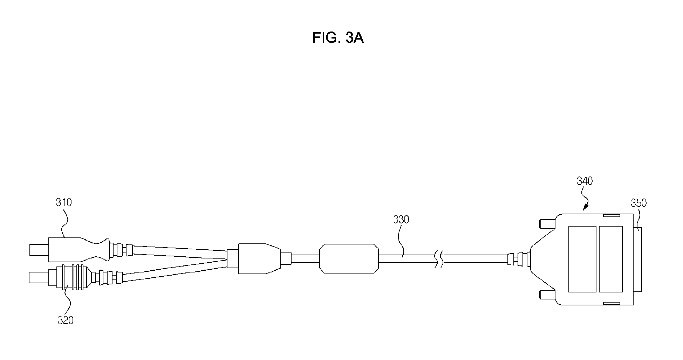

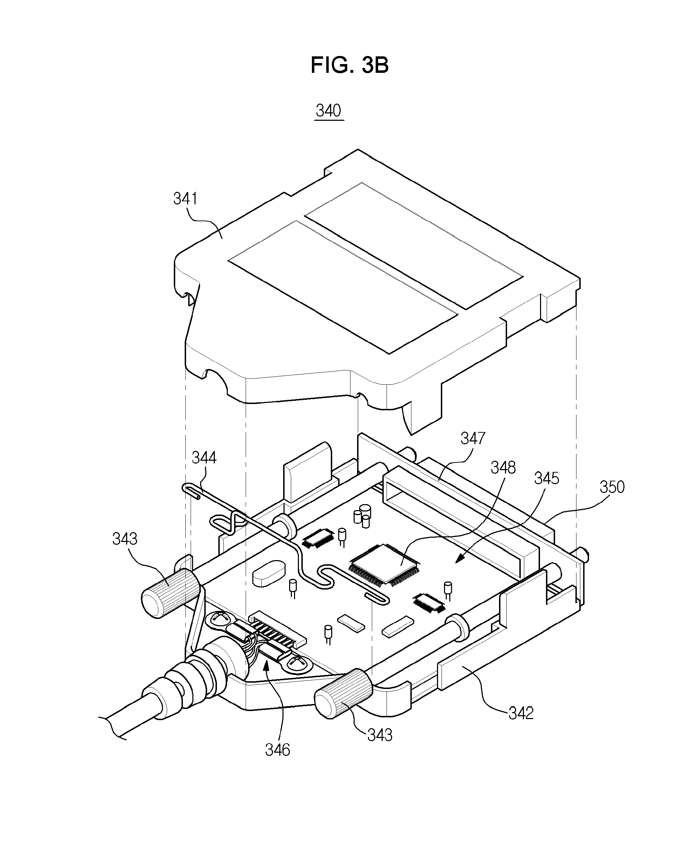

FIG. 3A illustrates the converter device 300 according to an embodiment of the present general inventive concept and FIG. 3B is an exploded perspective view illustrating the mechanical configuration of a data conversion unit 340 of the converter device 300 according to an embodiment of the present general inventive concept.

The converter device 300 may include the USB port connector 310, the power connector 320, the connecting cable 330, the data conversion unit 340, and the parallel port connector 350.

The USB port connector 310 of the converter device 300 is connected to the USB port 210 of the image forming apparatus 200 to transmit or receive data or command correspond to functions of the image forming apparatus 200 and/or the host device. The USB port connector 310 may be connected to USB connectors DP, DM and VBUS.

The power connector 320 of the converter device 300 is connected to the power supply port 220 of the image forming apparatus 200 to receive power supplied or generated from a power source of the image forming apparatus 200. The power connector 320 transfers power supplied from the power supply port 220 to the data conversion unit 340.

The connecting cable 330 is a path through which data input/output between the USB port connector 310 and the parallel port connector 350 is transferred. Further, the connecting cable 330 is a path through which power applied to the power connector 320 is transferred to the data conversion unit 340.

Referring to FIG. 3B, the data conversion unit 340 may include a top cover 341, a bottom cover 342, fixing pins (coupling elements) 343, a ground spring 344, and a data conversion circuit (or data conversion printed circuit board) 345.

The top cover 341 and the bottom cover 342 are combined with each other using snap and/or press-fit elements. The fixing pins 343 are provided to one or two sides of the top cover 341 and the bottom cover 342 and rotated to connect the parallel port connector 350 with the parallel port 110 of the host 100.

The ground spring 344 is connected to ground pins (pin 11 and pin 12) of a data conversion circuit connector 346. The ground spring 344 is connected to the fixing pins 343. The fixing pins 343 are connected to a flat ground (FGND) 347 to provide a potential to the ground pins 11 and 12.

The data conversion circuit 345 may include a microcomputer 348 mounted thereon. The microcomputer 348 may convert data output from the USB port 210 into data capable of being input to the parallel port 110 or convert data output from the parallel port 110 into data capable of being input to the USB port 210.

The data conversion circuit 345 may include conductive lines to electrically connect the data conversion connector 346 to the microcomputer 348 and to connect the microcomputer 348 to the parallel port connector 350.

The parallel port connector 350 is connected to the parallel port 110 of the host device 100 and then fixedly coupled to the parallel port 110 of the host device 100 using by coupling the coupling element 343 to corresponding coupling element of the parallel port 110 of the host device 100.

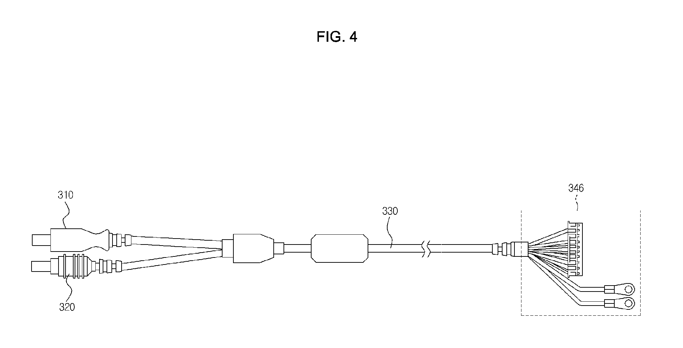

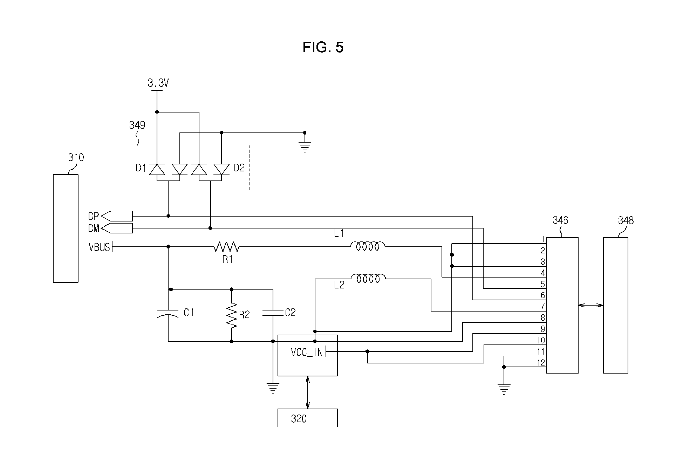

FIG. 4 illustrates the connecting cable 330 of the converter device 300 according to an embodiment of the present general inventive concept and FIG. 5 is a circuit diagram illustrating the data conversion circuit connector 346 of FIG. 4.

Referring to FIG. 4, the connecting cable 330 of the converter device 300 may include the data conversion circuit connector 346 connected to the data conversion circuit 345, the USB port connector 310, and the power connector 320.

The data conversion circuit connector 346 of the converter device 300 may be a 12-pin connector connected to the data conversion circuit 345. The pin arrangement of the 12-pin connector is shown in Table 1.

**Table 1**

| Connector | USB | Power |
|---|---|---|
| 1 | - | FGND |
| 2 | - | FGND |
| 3 | - | FGND |
| 4 | VBUS | - |
| 5 | DM | - |
| 6 | DP | - |
| 7 | GND | - |
| 8 | - | FGND |
| 9 | - | Vcc- |
| 10 | - | Vcc |
| 11 | - | FGND |
| 12 | - | FGND |

Referring to Table 1 and FIG. 5, pins 1, 2 and 3 of the 12-pin connector are connected to FGND applied to the power connector 320, and pin 4 is connected to a USB connector VBUS connected to the USB port connector 310. Pins 5, 6 and 7 are respectively connected to USB connectors (terminals) DM, DP and GND of the USB port 210 connected to the USB port connector 310, and pins 8, 11 and 12 are connected to FGND applied to the power connector 320.

In FIG. 5, the conversion device 300 may include a diode unit 349 to remove noise from data input through the USB port 210, inductors L1 and L2 to remove external noise, resistors R1 and R2 provided to prevent circuit fault (or a short circuit) due to inrush current (or voltage drop or surge), and capacitors C1 and C2 charge power to function as a subsidiary power supply or stabilize the power supply. Potentials, for example, 3.3V, may be supplied from the data conversion circuit connector 346 or the microcomputer 348 using, for example, the power supplied from the image forming apparatus 200.

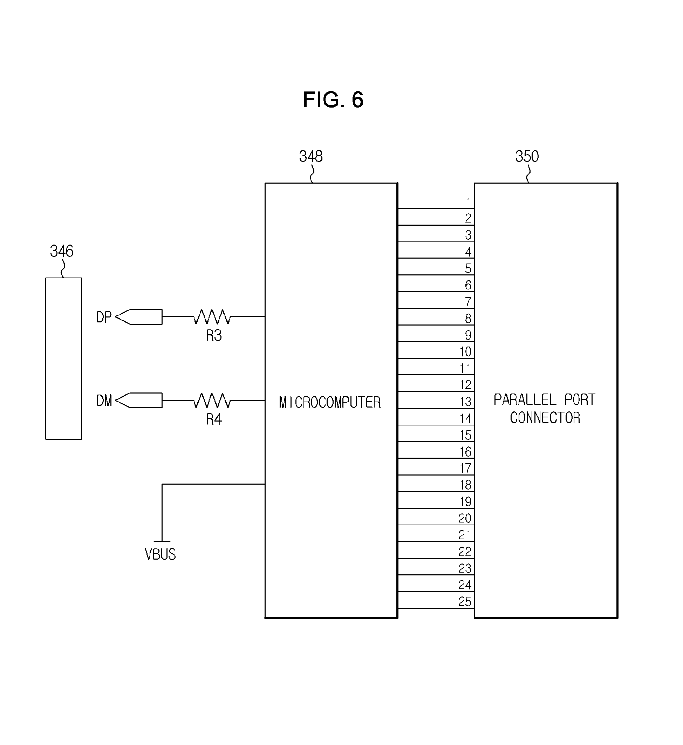

FIG. 6 is a view illustrating the operation of the microcomputer 348 of the data conversion circuit 345 of the converter device 300 according to an embodiment of the present general inventive concept.

The microcomputer 348 converts signals of terminals DP, DM and VBUS, which are input through the data conversion circuit connector 346, that is, data in the USB format, into data capable of being input to the parallel port connector 350. The parallel port connector 350 is connected to the parallel port 110 to transfers the converted data. The microcomputer 348 may also convert signals of the parallel port connector 350 into data in the USB format to transfer the converted data to the image forming apparatus 200. The parallel port 110 may have an IEEE 1284 interface structure. The parallel port connector 350 is adapted to the IEEE 1284 interface structure to be connected to the parallel port 110. The IEEE 1284 interface pin arrangement is shown in Table 2.

**Table 2**

| Pin No (D-Type 25) | SPP Signal | Direction In/out | Register | Hardware Inverted |
|---|---|---|---|---|
| 1 | nStrobe | In/Out | Control | Yes |
| 2 | Data 0 | Out | Data | |
| 3 | Data 1 | Out | Data | |
| 4 | Data 2 | Out | Data | |
| 5 | Data 3 | Out | Data | |
| 6 | Data 4 | Out | Data | |
| 7 | Data 5 | Out | Data | |
| 8 | Data 6 | Out | Data | |
| 9 | Data 7 | Out | Data | |
| 10 | nAck | In | Status | |
| 11 | Busy | In | Status | Yes |
| 12 | Paper-Out / Paper-End | In | Status | |
| 13 | Select | In | Status | |
| 14 | nAuto-Linefeed | In/Out | Control | Yes |
| 15 | nError / nFault | In | Status | |
| 16 | nInitialize | In/Out | Control | |
| 17 | nSelect-Printer / nSelect-In | In/Out | Control | Yes |
| 18-25 | Ground | Gnd | | |

FIG. 7 is a block diagram illustrating the host device 100 and the image forming apparatus 200 connected through the converter device 300 according to an embodiment of the present general inventive concept.

The image forming apparatus 200 may include a user interface 230, a USB interface 240, a control unit 250, a power supply unit 260, and a power supply switch circuit 270.

The user interface 230 receives a command for the image forming apparatus 200 from a user. The user interface 230 may include a touch panel or a key input unit.

The user may operate the user interface 230 to execute functions of the image forming apparatus 200. The user interface may generate the command to enable data communication between the host device 100 and the image forming apparatus to transmit or receive data such that the image forming apparatus 200 can perform the function, for example, a printing operation, according to the data.

The USB interface 240 performs data communication with the host device 100. The USB interface 240 includes the USB port 210. The USB port 210 is connected to the converter device 300 through the connecting cable 330. The USB port 210 may include USB connectors DP, DM and VBUS and be connected to external terminals through the USB connectors DP, DM and VBUS. The USB interface 240 may include an interface integrated circuit (not illustrated) including a memory-mapped interface, a control interface, etc. Further, the interface integrated circuit may include a power connector, a reset connector, and an input stage that generates a clock signal to support the date transmission.

The control unit 250 determines a current state of the image forming apparatus 200 and cuts off power supply if the current state of the image forming apparatus 200 does not require power supply to the converter device 300. The control unit 250 may determine that the state does not require power supply to the converter device 300 when the image forming apparatus 200 does not receive data from the host device 100 and does not transmit data to the host device 100 since the image forming apparatus 200 is not in an operation mode, but in a sleep mode. The image forming apparatus 200 may enter a power-saving mode corresponding to a low-power mode, such as the sleep mode or a power-off mode, such that the image forming apparatus 200 does not perform a printing operation of printing an image on a printing medium using a printing unit. If power is supplied to the converter device 300 when the image forming apparatus 200 does not perform the printing operation, unnecessary power consumption increases and the durability of the power supply unit 260 and the converter device 300 decreases. Accordingly, the control unit 250 may cut off power supply to the converter device 300 in the low-power mode in which the image forming apparatus 200 does not perform the printing operation, thereby to reduce power consumption and extend the lifespan of the converter device 300.

The control unit 250 controls the converter device 300 to be supplied with no power when a user command is input through the user interface 230 and an operation corresponding to the input user command does not require an interface with the host device 100. The control unit 250 may control only the image forming apparatus 200 to enter an operation mode and perform a corresponding operation while supplying no power to the converter device 300 in the power-saving mode, etc. For example, when a cover of a housing of the image forming apparatus, for example, a copy machine, is in the sleep mode or is opened for a copying operation, for example, s scanning and printing operation, the control unit 250 may control only the copy machine to enter an operation mode to perform the copying operation while not supplying power to the converter device 300.

The control unit 250 may control the converter device 300 to be supplied with power if the user interface 230 is operated by the user and an input is applied to a touch pad or a key input unit corresponding to an input unit thereof.

The control unit 250 may determine a power supply mode to supply power to the converter device 300 or a power interrupt mode to cut off the power supply to the converter device 300, according to the status of the image forming apparatus 200.

The status of the image forming apparatus 200 may be determined according to an input signal from a user through the user interface 230, an operation of the image forming apparatus 200 or according to a determination whether to need the data communication to perform the operation (or printing operation) thereof. That is, when the image forming apparatus 200 requires data communication with an external device, for example, the host device 100, to obtain data (print data) therefrom to perform a function (printing operation) of the image forming apparatus 200, the image forming apparatus 200 may determine whether to supply the power. Therefore, the power is selectively transmit or supply power to an external device, for example, the host device, according to data for the printing operation.

The control unit 250 may determine the power supply to the converter device when the USB format data is transmitted or received. The control unit 250 may determine the power supply when the printing operation is performed and a result of the performed printing operation is transmitted to the host device 100. The control unit 250 may determine the power supply when the data communication with the host device 100 is necessary to perform the printing operation. The control unit may determine interruption of the power supply when data stored in a memory unit of the image forming apparatus 200 is used to perform the printing operation or when the data communication with the host device 100 is not necessary to perform the printing operation. Here, the printing operation is an example of functions of the image forming apparatus 200. It is possible that the printing operation can be a scanning operation, a fax transmission operation, a copying operation and so on.

However, it is also possible that the control unit 250 may determine the power supply according to a detection of connection with the converter device 300. In this case, the image forming apparatus 200 may have a detecting unit (not illustrated) to detect a connection between the image forming apparatus 200 and the converter device 300 and to generate a signal to the control unit 250 so that the control unit 250 can allow the power supply to the converter device 300

The power supply switch circuit 270 supplies power or cuts off power supply by using a fuse, a polyswitch or a transistor TR. The power supply switch circuit 270 may include at least one of a manual switch, such as the fuse and the polyswitch, and an active switch, such as the transistor.

The power supply unit 260 may be a switched mode power supply (SMPS). The SMPS may convert commercial power of 220V or 100V, for example, to different powers of 12V, 24V, 48V, 5V, etc., which may be used in the image forming apparatus 200 or the converter device 300. That is, the power supply unit 260 converts the power of 220V or 100V to powers required by internal elements of the image forming apparatus 200. In accordance with an aspect of the present general inventive concept, the power supply unit 260 may generate and transmit 5V to the control unit 250.

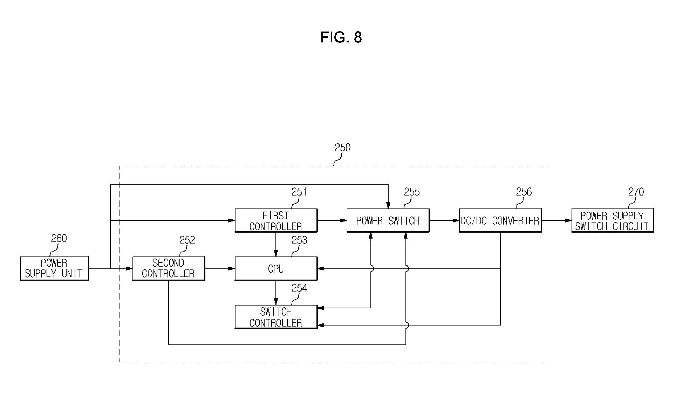

FIG. 8 is a block diagram illustrating the controller 250 connected to the power supply unit 260 and the power supply switch circuit 270 of the image forming apparatus according to an embodiment of the present general inventive concept.

The control unit 250 of the image forming apparatus 200 may include a first controller 251, a second controller 252, a central processing unit (CPU) 253, a switch controller 254, a power switch 255, and a DC/DC converter 256.

The power supply unit 260 may convert commercial power applied thereto into power at a predetermined level (for example, 5V) and supply the power, 5V, to the first controllers 251, second controller 252 and power switch 255 of the control unit 250.

The first controller 251 controls the power switch 255 to be turned on for a predetermined time according to power of a predetermined level (5V_SMPS) supplied from the power supply unit 260.

The power switch 255 bypasses (allows transmission of) the power of a predetermined level supplied from the power supply unit 260 when being turned on. For example, the power switch 255 bypasses (transmits) the power 5V_SMPS as 5V. When the power switch 255 bypasses the power supplied from the power supply unit 260, the DC/DC converter 256 is provided with the bypassed power. The DC/DC converter 256 converts the bypassed power into power at a predetermined level. For example, the DC/DC converter 256 converts the bypassed power of 5V into 3.3V, 1.8V and 1.1V. The DC/DC converter 256 supplies the converted powers 3.3V, 1.8V and 1.1V to the internal circuit elements of the control unit 250 and/or the image forming apparatus 200. The internal circuit elements of the control unit 250 are operated with the powers supplied from the DC/DC converter 256. In addition, the DC/DC converter 256 may supply the converted powers to the power supply switch circuit 270. The power supply switch circuit 270 may be manually turned off according to an overcurrent or may be actively turned on or off under the control of the control unit 250 to supply the powers supplied thereto to the converter device 300.

Meanwhile, the power at a predetermined level (5V) bypassed by the power switch 255 of the control unit 250 may be directly supplied to the power supply switch circuit 270 without passing through the DC/DC converter 256 (when the converter device 300 requires 5V as an operation voltage), which is not illustrated in FIG. 8.

The first controller 251 operates the CPU 253 according to the power of a predetermined level (5V_SMPS) supplied from the power supply unit 260.

After a lapse of a predetermined time in which the first controller 251 turns on the power switch 255, the CPU 253 controls the switch controller 254 to maintain the turn-on state of the power switch 255. That is, the power switch 255 is turned on by the first controller 251 for a predetermined time of the initial stage in which the power is supplied from the power supply unit 260, and then turned on by the switch controller 254 under the control of the CPU 253 after lapse of the predetermined time.

The second controller 252 may control the power switch 255 to be set from an off state to an on state when the user operates the input unit (not illustrated) of the image forming apparatus 200 to power off the image forming apparatus 200 and then power on the image forming apparatus 200 in a software manner.

The first controller 251 operates when the image forming apparatus 200 is turned on in a hardware manner, and the second controller 252 operates when the image forming apparatus 200 that has been turned on in the hardware manner is turned off and then on in the software manner. Here, the turn on state of the hardware manner may be a state in which power is supplied from an external device to the image forming apparatus 200 and the turn state of the software manner may be a state in which the control unit 250 is operating according to the power supplied from the power supply unit 260.

The DC/DC converter 256 may include a first converter to provide low power and a second controller to provide high power. For example, the first converter may supply 1.8V and the second converter may supply 4V. It may be possible to obtain a wider variety of power levels if the DC/DC converter 256 includes a number of converters.

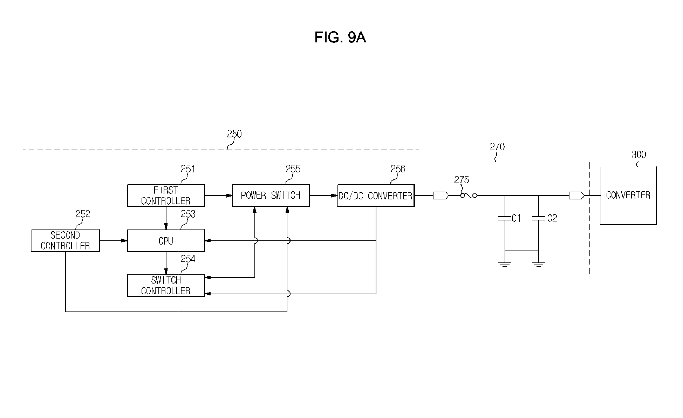

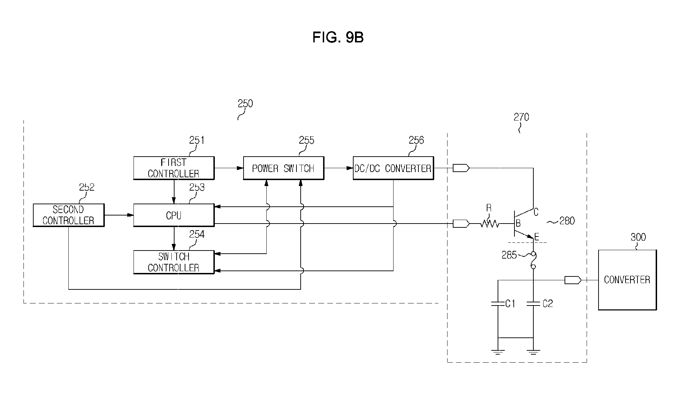

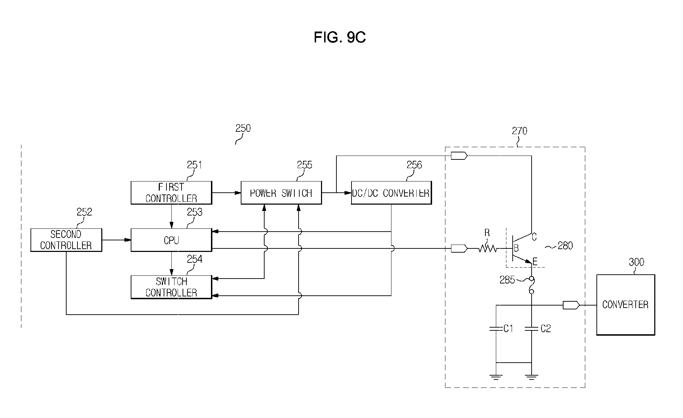

FIGS. 9A, 9B and 9C are views illustrating circuit configurations of the power supply switch circuit 270 of the image forming apparatus according to embodiments of the present general inventive concept.

Referring to FIG. 9A, the power supply switch circuit 270 may include a switch 275 manually turned off based on a level of current applied thereto. The switch 275 is turned off if the current level is higher than a predetermined level (in case of overcurrent). The switch 275 may include a fuse or polyswitch. The fuse is used for overcurrent protection. The fuse is used as a disposable protection element when overcurrent flows. The fuse must be replaced if broken due to flow of overcurrent therethrough. The polyswitch may be formed of a conductive polymer and repeatedly used semipermanently. The polyswitch is converted from a low resistor to a high resistor according to Joule's heat generated from overcurrent flowing into the power supply switch circuit 270. The polyswitch may interrupt flow of overcurrent when converted to the high resistor. The polyswitch is converted into the low resistor from the high resistor when the overcurrent is interrupted so as to decrease Joule's heat to thereby enable a circuit to operate in a normal operation.

Referring to FIG. 9B, the power supply switch circuit 270 may include a first switch 280 corresponding to an active switch, such as a transistor, and a second switch 285 corresponding to a manual switch, such as a fuse.

The first switch 280, such as a transistor, is an active switch element. The transistor may be used as a switch because it is turned on or off according to a bias applied to a base terminal B thereof. The transistor may be turned on or off when the DC/DC converter 256 of the control unit 250 applies a predetermined voltage VDD to a collector terminal C of the transistor and the CPU 253 applies a predetermined signal to the base terminal B of the transistor. When the transistor is turned on or off, supply of power output from the image forming apparatus 200 to the converter 300 is permitted or the supply of power is cut off.

The CPU 253 may turn off the first switch 280 when the image forming apparatus 200 is in a mode in which the operation of the converter device 300 is not needed, such as the sleep mode, so as to cut off power supply. The image forming apparatus 200 does not require the converter device 300 to operate when in the sleep mode or power-saving mode. Accordingly, the CPU 253 may turn off the first switch 280 such that power is not supplied to the converter device 300. When the first switch 280 is turned off, power supply to the converter device 300 is cut off so as to prevent unnecessary power consumption.

The second switch 285, such as a fuse, is a passive switch element, as described above with reference to FIG. 5A. When overcurrent flows through the power supply switch circuit 270, the second switch 285 is turned off by the fuse or polyswitch, and thus power supply is cut off so as to protect the power supply switch circuit 270.

FIG. 9C illustrates a circuit configuration in which the power switch 255 of the control unit 250 supplies the voltage VDD to the first switch 280 of the power supply switch circuit 270, which is distinguished (different) from the circuit configuration of FIG. 9B in which the DC/DC converter 256 of the control unit 250 supplies the voltage VDD to the first switch 280. If the level of the power bypassed by the power switch 255 is equal to the level of operation power of the converter 300 device, the power output from the power switch 255 may be directly applied to the converter device 300 without passing through the DC/DC converter 256.

Capacitors C1 and C2 are provided to reduce noise of the power supply switch circuit 270 and prevent a circuit fault due to inrush current and a resistor R is provided to prevent the transistor, that is, the first switch 280, from being shorted.

Although the power supply switch circuit 270 illustrated in FIG. 9A includes the passive switch element and the power supply switch circuit 270 illustrated in FIGS. 9B and 9C includes both the passive switch element and active switch element in the above embodiments, the power supply switch circuit 270 may include only the active switch element or may not include any one of the active switch and passive switch.

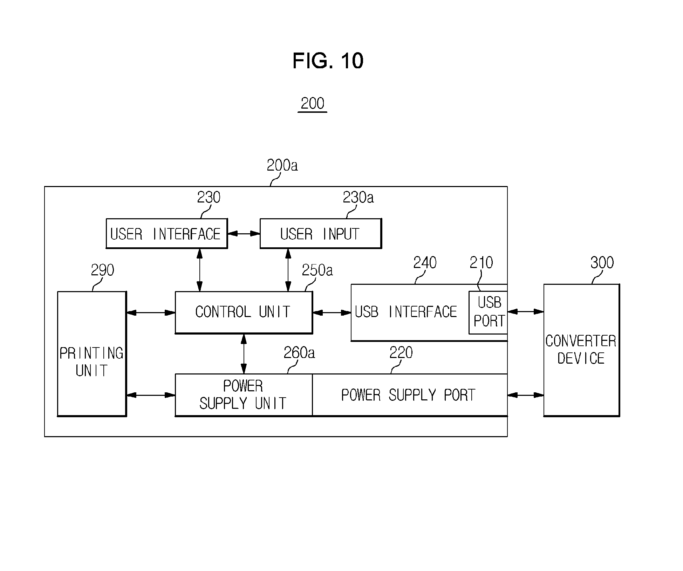

Referring to FIGS. 7 and 10, the image forming apparatus 200 may include a printing unit 290 to perform one of functions of the image forming apparatus, and a control unit 250a to control the printing unit 290. The control unit 250a may control the power supply unit 260a to turn on or off the power supply port 220.

That is, according to a control signal of the control unit 250a, the power supply unit 260a controls the power supply port to output the power. The control unit may also communicate with the user interface 230 and/or a user input unit 230a to input a user input to the control unit 250a to control the printing operation. The power supply unit 260a generates a number of power signals including the power to be supplied to the converter device 3000 through the power supply port 220.

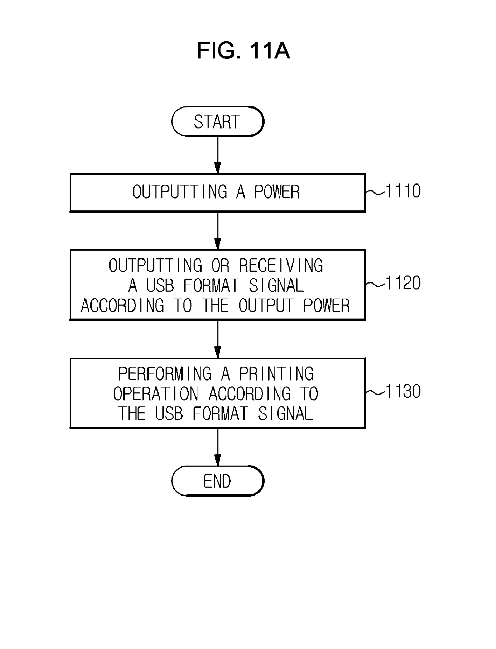

Referring to FIGS. 7 through 11A, a power is output to the converter device 300 at operation 1110. A USB format signal is input or output according to the power supply at operation 1120. A printing operation is performed according to the USB format signal at operation 1130.

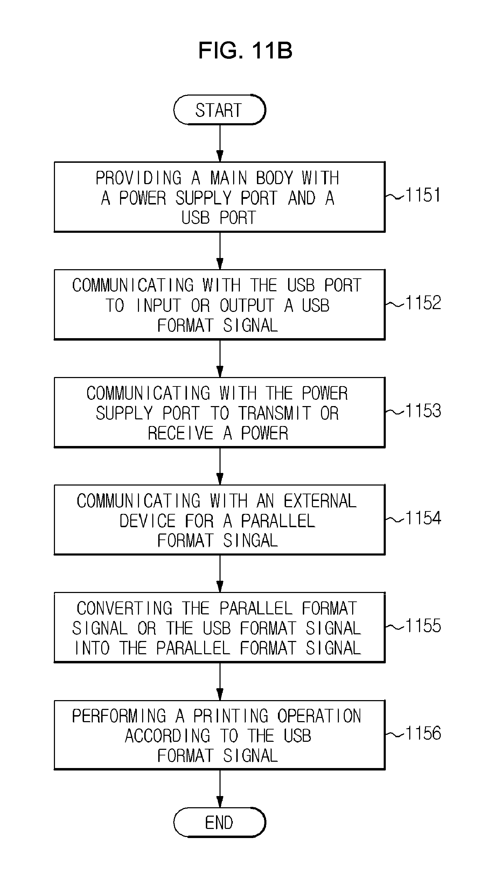

Referring to FIGS. 7 through 11B, the image forming apparatus 200 may be formed with a main body having a power supply port and a main body USB port installed thereon to communicate with the power supply unit and the USB interface, respectively, at operation 1151. A first communication is performed with the main body USB port for input and output of a USB format signal at operation 1152. A second communication is performed with the power supply port for a power at operation 1153. A third communication is performed with an external device for input and output of a parallel format signal at operation 1154. The parallel format signal or the USB format signal is converted into the USB format signal or the parallel format signal according to the power at operation 1155. A printing operation is performed according to input or output of the USB format signal at operation 1156.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

According to an aspect and utilities of the present general inventive concept, the drive power of the converter device is supplied from the image forming apparatus, and thus power consumption is reduced and stable power is supplied to the converter device..

Although a few embodiments of the present general inventive concept have been shown and described, it would be appreciated by those skilled in the art that changes may be made in these embodiments without departing from the principles of the invention, the scope of which is defined in the claims.

## Claims

1. A converter device connected to a universal serial bus (USB) port of an image forming apparatus and a parallel port of a host device, the converter comprising:
a USB port connector connected to the USB port;
a parallel port connector connected to the parallel port;
a power connector connected to a power supply port of the image forming apparatus to be supplied with power from the image forming apparatus; and
a data conversion unit using the supplied power to convert data output from the USB port into data capable of being input to the parallel port or to convert data output from the parallel port into data capable of being input to the USB port.

2. The converter device according to claim 1, wherein the data conversion unit includes a microcomputer to perform conversion between data for the parallel port and data for the USB port.

3. The converter device according to claim 1, wherein the data conversion unit includes an upper cover and a lower cover press-fitted with each other.

4. The converter device according to claim 3, wherein the data conversion unit further includes fixing pins provided to both sides of the combined upper and lower covers and rotated to fix the parallel port connector to the parallel port.

5. The converter device according to claim 1, further comprising:
a connecting cable to connect the USB port connector and the power connector to the data conversion unit.

6. The converter device according to claim 5, further comprising:
a data conversion circuit connector to connect the connecting cable to the data conversion unit,
wherein the data conversion unit includes a ground spring connected to a ground pin of the data conversion circuit connector.

7. An image forming apparatus connected to a host device including a parallel port through a converter device, the image forming apparatus comprising:
a power supply unit to convert commercial power into power at a predetermined level so as to supply the power to the converter device;
a power supply port connected to the converter through a connecting cable so as to supply the power output from the power supply unit to the converter device; and
a USB port connected to the converter device such that data is transmitted/received to/from the host device.

8. The image forming apparatus according to claim 7, further comprising:
a control unit configured to directly output the power output from the power supply unit to the converter or configured to convert the power into power at a level required for the converter device to operate and output the converted power.

9. The image forming apparatus according to claim 8, further comprising:
a power supply switch circuit including a switch to transfer the power to the converter device or cut off the power supplied to the converter device.

10. The image forming apparatus according to claim 9, wherein the power supply switch circuit includes a switch to transfer the power or cut off power supply based on a level of current generated from the power output from the control unit.

11. The image forming apparatus according to claim 9, wherein the control unit turns the switch on or off based on an operation mode of the image forming apparatus so as to supply power to the converter device or cut off power supply to the converter device.

12. The image forming apparatus according to claim 9, wherein the power supply switch circuit includes a switch to transfer the power or cut off power supply based on a current level and a switch to transfer the power or cut off power supply based on an operation mode of the image forming apparatus.

13. The image forming apparatus according to claim 12, wherein the switch to transfer the power or cut off power supply based on an operation mode of the image forming apparatus cuts off power supply if the operation mode of the image forming apparatus is a mode that does not require the converter device to operate and transfers the power if the operation mode of the image forming apparatus is a mode that requires the converter device to operate.
